# EUROPEAN PATENT APPLICATION

(11) **EP 4 800 299 A1**
(43) Date of publication of application: **02.09.2026**
(21) Application number: 26157097.2
(22) Date of filing: 06.02.2026
(51) Int. Cl.: F23R 3/00, F23R 3/50, F23R 3/60

(54) **COMBUSTOR FOR A GAS TURBINE ENGINE**

(30) Priority: 26.02.2025 US 202519064046
(71) Applicant: General Electric Company, Cincinnati, Ohio 45215 (US)
(72) Inventor: SALAZAR LOIS, Gerardo Antonio, Evendale 45241 (US); KIRTLEY, Daniel, Evendale 45241 (US)
(74) Representative: Openshaw & Co.

(57) **Abstract**

A combustor (26, 26a, 26b) for a gas turbine engine (10) includes a dome (56), a cowl (60) connected with the dome (56) via an outer connection (106) and via an inner connection (112), an outer liner (54) having an outer liner first end (102) connected with the outer connection (106) and an outer liner second end (104) arranged downstream of the outer liner first end (102), an inner liner (52) having an inner liner first end (108) connected with the inner connection (112) and an inner liner second end (110) arranged downstream of the inner liner first end (108), and a combustion chamber (62) defined between the outer liner (54) and the inner liner (52). An outer piston ring assembly (114) is connected at a first end (118) to the outer connection (106) and includes a piston ring (122) at a second end (120), and an inner piston ring assembly (124) is connected at a first end (128) to the inner connection (112) and includes a piston ring (132) at a second end (130).

## Description

### TECHNICAL FIELD

The present disclosure relates to a combustor for a gas turbine engine.

### BACKGROUND

Gas turbine engines, for example, for aircraft, generally include a fan and a core section arranged in flow communication with one another. Some gas turbine engines include piston rings around a downstream end of an inner liner and an outer liner of a combustor. The piston rings are held in place by one or more piston ring housings attached to an outer casing, for example, at a structural bolted joint. The piston rings can form a seal with the downstream end of the inner liner and the outer liner.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional side view of an exemplary high by-pass turbofan jet engine, according to an aspect of the present disclosure.
FIG. 2 is a schematic, cross-sectional side view of a combustor, according to an aspect of the present disclosure.
FIG. 3 is a schematic, cross-sectional side view of a portion of the combustor of FIG. 2, according to an aspect of the present disclosure.
FIG. 4A is a top view of a portion of an outer piston ring housing, taken at view 4A-4A of FIG. 3, according to an aspect of the present disclosure.
FIG. 4B is a top view of a portion of an inner piston ring housing, taken at view 4B-4B of FIG. 3, according to an aspect of the present disclosure.
FIG. 5 is a schematic, cross-sectional side view of an alternate combustor to the combustor of FIG. 3, according to an aspect of the present disclosure.
FIG. 6 is a schematic, cross-sectional side view of an alternate combustor to the combustor of FIG. 3, according to an aspect of the present disclosure.
FIG. 7 is an enlarged, schematic, cross-sectional view of a portion of a piston ring housing assembly, taken at detail 180 of FIG. 3, according to an aspect of the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "low" and "high," or their respective comparative degrees (e.g., "lower" and "higher," where applicable), when used with the compressor, turbine, shaft, or spool components, each refers to relative pressures and/or relative speeds within an engine unless otherwise specified. For example, a "low-speed" component defines a component configured to operate at a rotational speed, such as a maximum allowable rotational speed, which is lower than that of a "high-speed" component of the engine. Alternatively, unless otherwise specified, the aforementioned terms may be understood in their superlative degree. For example, a "low-pressure turbine" may refer to the lowest maximum pressure within a turbine section, and a "high-pressure turbine" may refer to the highest maximum pressure within the turbine section. The terms "low" or "high" in such aforementioned regards may additionally, or alternatively, be understood as relative to minimum allowable speeds and/or pressures, or minimum or maximum allowable speeds and/or pressures relative to normal, desired, steady state, etc., operation of the engine.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

As used herein, the terms "inner" and "outer" refer to relative positions in the radial direction with respect to the centerline of the turbine engine, with "inner" being radially closer to the centerline of the turbine engine than "outer."

As used herein, the term "ceramic matrix composite" ("CMC") refers to a subgroup of composite materials and a subgroup of ceramics. The terms "CMC" and "CMC material" are used interchangeably herein. When the engine component comprises or includes "CMC" or "CMC material," it is understood that the engine component may include one of, or combinations of one or more of the ceramic matrix composite materials described herein. Such engine component may also include non-ceramic matrix composite materials, such as a metal alloy (e.g., a CMC material for an airfoil and separate disk with dovetail slot made from a metal alloy).

More specifically, CMC refers to a class of materials that includes a reinforcing material (e.g., reinforcing fibers) surrounded by a ceramic matrix. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃·2SiO₂), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing and subsequent chemical processing to arrive at a component formed of a CMC material having a desired chemical composition. For example, the preform may undergo a cure or burn-out to yield a high char residue in the preform, and subsequent melt-infiltration ("MI") with silicon, or a cure or pyrolysis to yield a silicon carbide matrix in the preform, and subsequent chemical vapor infiltration ("CVI") with silicon carbide. Additional steps may be taken to improve densification of the preform, either before or after chemical vapor infiltration, by injecting the preform with a liquid resin or a polymer followed by a thermal processing step to fill voids in the preform with silicon carbide. CMC material as used herein may be formed using any known methods or hereinafter developed including but not limited to melt infiltration, chemical vapor infiltration, polymer impregnation pyrolysis (PIP) and any combination thereof.

Such materials, along with certain monolithic ceramics (i.e., ceramic materials without a reinforcing material), are particularly suitable for higher temperature applications. Additionally, these ceramic materials are lightweight compared to metal alloys (e.g., superalloys), yet can still provide strength and durability to the component made therefrom. Therefore, such materials are currently being considered for many gas turbine components used in higher temperature sections of gas turbine engines, such as airfoils (e.g., turbines and vanes), combustors, shrouds, and other like components that would benefit from the lighter-weight and higher temperature capability these materials can offer.

Gas turbine engines, for example, for aircraft, generally include a fan and a core section arranged in flow communication with one another. Some gas turbine engines include piston rings around a downstream end of an inner liner and an outer liner of a combustor. The piston rings are held in place by one or more piston ring housings attached to an outer casing, for example at a structural bolted joint. The piston rings can form a seal with the downstream end of the inner liner and the outer liner. The piston ring housings being attached to the outer casing can require a blind assembly which can lead to the piston rings being misaligned resulting in a poor seal. Design choices of the piston ring holder can also be limited due to changes to the design choice potentially impacting the structural bolted joint.

The present disclosure addresses the foregoing by implementing an arrangement wherein the piston ring housings are attached to the dome structure and the cowl structure of the combustor instead of the outer casing. This arrangement allows the combustor to be assembled as a module and eliminates an attachment point with the structural bolted joint in the outer casing. As a result, the arrangement simplifies the installation process and provides greater design flexibility of the piston ring housing.

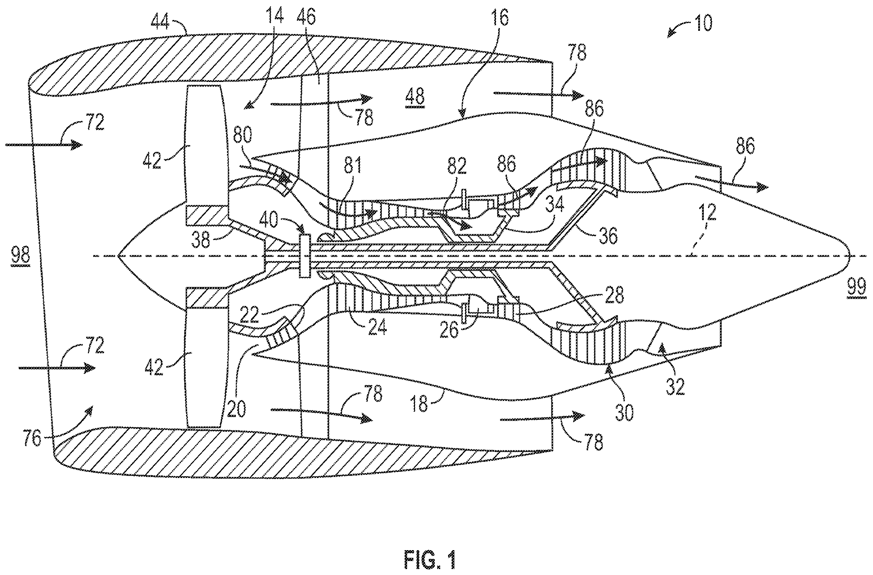

Referring now to the drawings, FIG. 1 is a schematic, cross-sectional side view of an exemplary high by-pass turbofan jet engine 10, herein referred to as "engine 10," as may incorporate various embodiments of the present disclosure. Although further described below with reference to a ducted turbofan engine, the present disclosure is also applicable to turbomachinery in general, including turbojet, turboprop, and turboshaft gas turbine engines, including marine and industrial turbine engines and auxiliary power units. In addition, the present disclosure is not limited to ducted fan type turbine engines such as that shown in FIG. 1 but can be implemented in unducted fan (UDF) type turbine engines. As shown in FIG. 1, engine 10 has a longitudinal centerline axis 12 that extends therethrough from an upstream end 98 of the engine 10 to a downstream end 99 of the engine 10 for reference purposes. In general, the engine 10 may include a fan assembly 14 and a turbo-engine 16 disposed downstream from the fan assembly 14.

The turbo-engine 16 may generally include an outer casing 18 that defines an annular inlet 20 to the turbo-engine 16. The outer casing 18 encases, or at least partially forms, in serial flow relationship, a booster or a low-pressure (LP) compressor 22, a high-pressure (HP) compressor 24, a combustor 26, an HP turbine 28, an LP turbine 30, and a jet exhaust nozzle 32. An HP rotor shaft 34 drivingly connects the HP turbine 28 to the HP compressor 24. An LP rotor shaft 36 drivingly connects the LP turbine 30 to the LP compressor 22. The LP rotor shaft 36 may also be connected to a fan shaft 38 of the fan assembly 14. In particular embodiments, as shown in FIG. 1, the LP rotor shaft 36 may be connected to the fan shaft 38 by way of a reduction gearbox assembly 40, such as in an indirect-drive or a geared-drive configuration. In other embodiments, although not illustrated, the engine 10 may further include an intermediate-pressure (IP) compressor and an IP turbine rotatable with an IP shaft that connects the IP turbine and the IP compressor.

As shown in FIG. 1, the fan assembly 14 includes a plurality of fan blades 42 that are coupled to, and extend radially outwardly from the fan shaft 38. An annular fan casing or a nacelle 44 circumferentially surrounds the fan assembly 14, or at least a portion of the turbo-engine 16, or both. The nacelle 44 may be supported relative to the turbo-engine 16 by a plurality of circumferentially spaced outlet guide vanes or struts 46. Moreover, at least a portion of the nacelle 44 may extend over an outer portion of the turbo-engine 16 so as to define a bypass airflow passage 48 between the nacelle 44 and the outer casing 18.

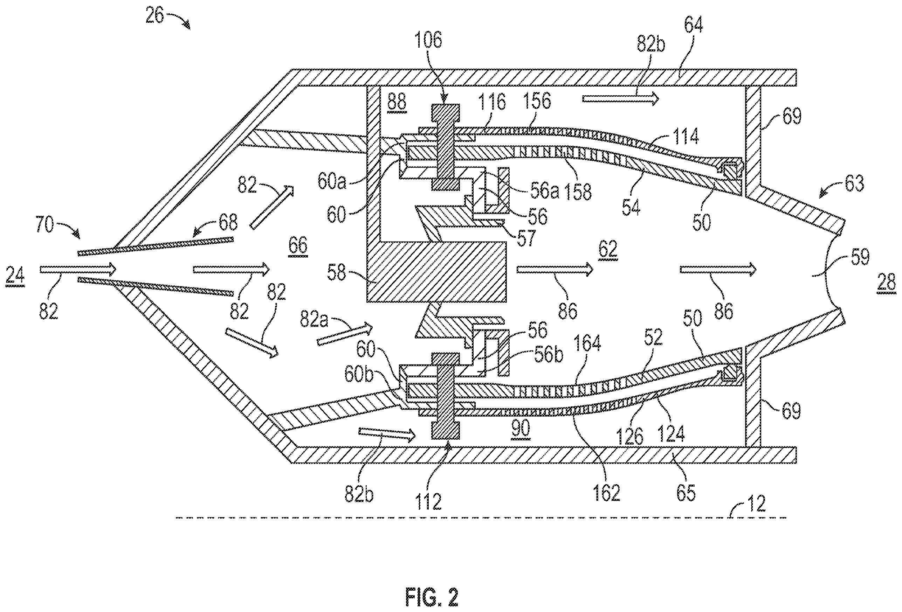

FIG. 2 is a schematic, cross-sectional side view of the combustor 26 of the turbo-engine 16 as shown in FIG. 1, according to an aspect of the present disclosure. FIG. 2 depicts an example of a generally annular combustor that extends circumferentially about the longitudinal centerline axis 12. The combustor 26 includes a cowl 60, also referred to as a cowl structure, having an outer cowl portion 60a and an inner cowl portion 60b, and a combustor liner 50 having an inner liner 52 and an outer liner 54. Each of the inner liner 52 and the outer liner 54 is an annular liner that extends circumferentially about the longitudinal centerline axis 12. The inner liner 52 includes a plurality of inner liner airflow cooling orifices 164 and the outer liner 54 includes a plurality of outer liner airflow cooling orifices 158. The inner liner 52 and the outer liner 54 can be made from a ceramic matrix composite (CMC) material. A dome 56, also referred to as a dome structure, includes an outer dome portion 56a and an inner dome portion 56b and extends between the inner liner 52 and the outer liner 54. The dome 56 extends circumferentially about the longitudinal centerline axis 12. The cowl 60, the dome 56, and the outer liner 54 are connected together via an outer connection 106. The cowl 60, the dome 56, and the inner liner 52 are connected together via an inner connection 112. The inner liner 52, the outer liner 54, and the dome 56, together, define a combustion chamber 62 therebetween.

The combustor 26 also includes an inner piston ring assembly 124 that includes a plurality of inner housing airflow orifices 162, and an outer piston ring assembly 114 that includes a plurality of outer housing airflow orifices 156. The inner piston ring assembly 124 includes an inner piston ring housing 126, and the outer piston ring assembly 114 includes an outer piston ring housing 116 (additional details described below).

A swirler assembly 57 is connected to the dome 56, and a fuel nozzle 58 engages with the swirler assembly 57. Fuel (not shown) provided by the fuel nozzle 58 is injected into the swirler assembly 57, where the fuel is mixed with air to form a fuel-air mixture (not shown) that is injected from the swirler assembly 57 into the combustion chamber 62. The fuel-air mixture is ignited by an ignitor (not shown) to cause a chemical reaction within the combustion chamber 62 that generates combustion gases 86. The combustion gases 86, also referred to as combustion products, and as will be described below, flow downstream within the combustion chamber 62 into the HP turbine 28 and then into the LP turbine 30 (FIG. 1) via a turbine nozzle 59 at a downstream end 63 of the combustor 26.

The combustor 26 further includes an outer casing 64 that extends circumferentially about the longitudinal centerline axis 12, and an inner casing 65 that also extends circumferentially about the longitudinal centerline axis 12. An outer flow passage 88 is defined between the outer casing 64 and the outer liner 54, and an inner flow passage 90 is defined between the inner casing 65 and the inner liner 52. A downstream wall 69 is arranged at the downstream end 63 of the combustor 26. While not explicitly shown, the downstream wall 69 can include air holes allowing air flow in the outer flow passage 88 and in the inner flow passage 90 to flow beyond the downstream wall 69 into other parts of the engine 10 (FIG. 1). The outer casing 64 and the inner casing 65 converge at an upstream end 70 of the combustor 26, and, together, define a pressure plenum 66. The outer casing 64 and the inner casing 65 are also connected with a diffuser 68. The diffuser 68 is in flow communication with the HP compressor 24 to receive a flow of compressed air 82 from the HP compressor 24 and to provide the flow of the compressed air 82 into the pressure plenum 66.

Referring back to FIG. 1, in operation of the engine 10, a volume of inlet air 72 enters the nacelle 44 at a nacelle inlet 76, and the inlet air 72 is propelled through the fan assembly 14. A portion of the inlet air 72 propelled by the fan assembly 14 enters the LP compressor 22 via the annular inlet 20 as a compressor inlet airflow 80, where the compressor inlet airflow 80 is compressed by the LP compressor 22 to generate compressed air 81. The compressed air 81 then flows to the HP compressor 24, where the compressed air 81 is further compressed to generate the compressed air 82. The compressed air 82 from the HP compressor 24 enters the combustor 26 via the diffuser 68 (FIG. 2). Another portion of the inlet air 72 propelled by the fan assembly 14 flows through the bypass airflow passage 48, thereby providing a bypass airflow 78. The bypass airflow 78 provides a majority of the thrust for the engine 10.

Referring back to FIG. 2, as described above, the compressed air 82 flows through the diffuser 68, which provides for a reduction in velocity of the compressed air 82 entering the pressure plenum 66 and increases a pressure of the compressed air 82 within the pressure plenum 66. A portion of the compressed air 82 in the pressure plenum 66 enters the cowl 60 (shown schematically as compressed air 82a), while another portion of the compressed air 82 (shown schematically as compressed air 82b) passes to the outer flow passage 88 and to the inner flow passage 90. The compressed air 82a passes through the swirler assembly 57 to mix with the fuel from the fuel nozzle 58 to generate the fuel-air mixture (not shown), which is then ignited and burned to generate the combustion gases 86. The compressed air 82b in the outer flow passage 88 and in the inner flow passage 90 may be used for various purposes, such as for cooling of the inner liner 52 and the outer liner 54, or for cooling other components of the engine 10.

Referring back to FIG. 1, the combustion gases 86 flow from the combustor 26 to the HP turbine 28 via the turbine nozzle 59 (FIG. 2), where work is extracted from the combustion gases 86 to rotate the HP turbine 28. The rotation of the HP turbine 28 thereby supports rotation of the HP compressor 24 via the HP rotor shaft 34. The combustion gases 86 then continue to flow downstream of the HP turbine 28 to the LP turbine 30, where additional work is extracted from the combustion gases 86 to rotate the LP turbine 30. The rotation of the LP turbine 30 thereby supports rotation of the LP compressor 22 via the LP rotor shaft 36, and also supports rotation of the fan assembly 14 via the fan shaft 38 connected to the reduction gearbox assembly 40. The remaining combustion gases 86 pass through the jet exhaust nozzle 32 and provide thrust.

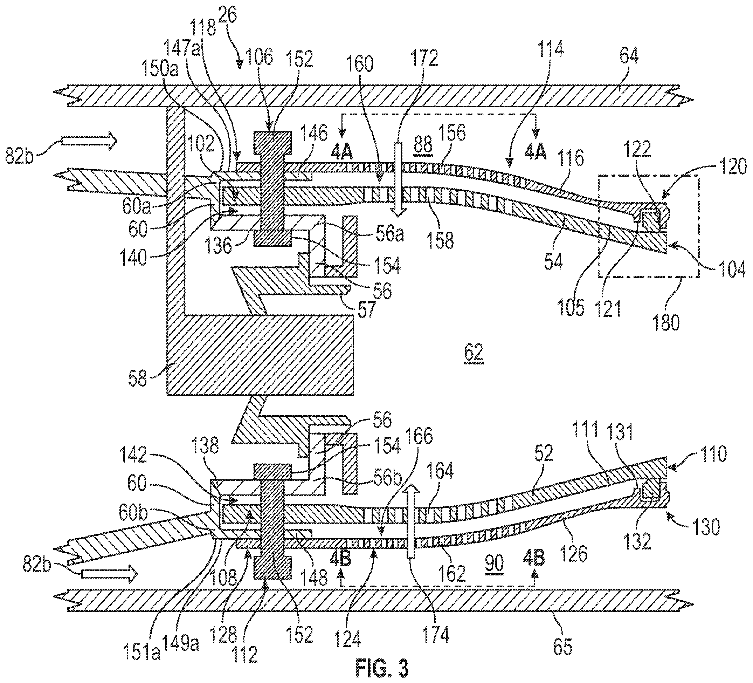

FIG. 3 is a schematic, cross-sectional view of a portion of the combustor 26 of FIG. 2, according to an aspect of the present disclosure. As was described above, the combustor 26 includes the dome 56, the cowl 60, the outer liner 54, and the inner liner 52. The cowl 60 is connected to the dome 56 via the outer connection 106 and via the inner connection 112. The cowl 60 includes an outer cowl connecting flange 146 connected with the outer connection 106, and an inner cowl connecting flange 148 connected with the inner connection 112. The outer liner 54 has an outer liner first end 102 connected with the outer connection 106, and an outer liner second end 104 arranged downstream of the outer liner first end 102. The inner liner 52 has an inner liner first end 108 connected with the inner connection 112, and an inner liner second end 110 arranged downstream of the inner liner first end 108.

The dome 56 includes an outer dome connecting flange 136 connected with the outer connection 106, and an inner dome connecting flange 138 connected with the inner connection 112. The outer dome connecting flange 136 and the outer cowl connecting flange 146 form an outer slot 140 therebetween for receiving the outer liner first end 102. The inner dome connecting flange 138 and the inner cowl connecting flange 148 form an inner slot 142 therebetween for receiving the inner liner first end 108.

The outer piston ring assembly 114 includes the outer piston ring housing 116 and an outer piston ring 122. The outer piston ring housing 116 includes an outer piston ring housing first end 118 and an outer piston ring housing second end 120. The outer piston ring housing first end 118 is connected to the outer connection 106. In the arrangement of FIG. 3, the outer piston ring housing first end 118 is arranged on an outer side 147a of the outer connection 106. The outer side 147a of the outer connection 106 can be an outer surface 150a of the outer cowl connecting flange 146. The outer piston ring housing second end 120 includes an outer piston ring holder 121 for receiving the outer piston ring 122. The outer piston ring housing 116 can be made from a metallic material. Thus, the outer piston ring assembly 114 is arranged as a cantilever, with the outer piston ring housing first end 118 being restrained longitudinally and radially by the outer connection 106, and the outer piston ring housing second end 120 being unrestrained and permitted to move radially and axially based on thermal expansion of the outer piston ring housing 116. The outer piston ring housing 116, however, is arranged to provide a spring loading against the outer liner 54 such that the outer piston ring housing second end 120 provides a radial force to cause the outer piston ring 122 to abut against an outer side 105 of the outer liner second end 104. Therefore, the outer piston ring 122 can form a seal against the outer liner second end 104. The outer piston ring housing 116 can be free from a connection with the outer casing 64 and with the inner casing 65 such that, as an example, the outer piston ring housing first end 118 and the outer piston ring housing second end 120 engage with one or more of the dome 56, the cowl 60, or the outer liner 54.

The inner piston ring assembly 124 includes the inner piston ring housing 126 and an inner piston ring 132. The inner piston ring housing 126 includes an inner piston ring housing first end 128 and an inner piston ring housing second end 130. The inner piston ring housing first end 128 is connected to the inner connection 112. In the FIG. 3 arrangement, the inner piston ring housing first end 128 is arranged on an inner side 149a of the inner connection 112. The inner side 149a of the inner connection 112 can be an inner surface 151a of the inner cowl connecting flange 148. The inner piston ring housing second end 130 includes an inner piston ring holder 131 for receiving the inner piston ring 132. Similar to the outer piston ring housing 116, the inner piston ring housing 126 can be made from a metallic material. Thus, the inner piston ring assembly 124 is arranged as a cantilever, with the inner piston ring housing first end 128 being restrained longitudinally and radially by the inner connection 112, and the inner piston ring housing second end 130 being unrestrained, and permitted to move radially and axially based on thermal expansion of the inner piston ring housing 126. The inner piston ring housing 126, however, is arranged to provide a spring loading against the inner liner 52 such that the inner piston ring housing second end 130 provides a radial force to cause the inner piston ring 132 to abut against an inner side 111 of the inner liner second end 110. Therefore, the inner piston ring 132 can form a seal against the inner liner second end 110. The inner piston ring housing 126 can be free from a connection with the outer casing 64 and with the inner casing 65 such that, as an example, the inner piston ring housing first end 128 and the inner piston ring housing second end 130 engage with one or more of the dome 56, the cowl 60, or the inner liner 52.

The outer connection 106 and the inner connection 112 can each include a fastener 152 and a retention member 154 connected to the fastener 152. In an embodiment, the fastener 152 can be, for example, a threaded fastener, such as a bolt, and the retention member 154 can be, for example, a threaded nut. In other embodiments, the fastener 152 may be a pin, and the retention member 154 can be a clip. Although a fastener is used in this embodiment, other forms of securing the outer connection 106 and the inner connection 112 can be implemented instead.

As was described above, the outer piston ring housing 116 includes the plurality of outer housing airflow orifices 156 extending therethrough, and the outer liner 54 includes the plurality of outer liner airflow cooling orifices 158 therethrough. An outer airflow baffle passage 160 is defined between the outer piston ring housing 116 and the outer liner 54. In operation of the combustor 26, the compressed air 82b flowing within the outer flow passage 88 flows through the plurality of outer housing airflow orifices 156 as an outer cooling airflow 172 into the outer airflow baffle passage 160, and then flows from the outer airflow baffle passage 160 through the plurality of outer liner airflow cooling orifices 158 into the combustion chamber 62. Similarly, as was described above, the inner piston ring housing 126 includes the plurality of inner housing airflow orifices 162 therethrough, and the inner liner 52 includes the plurality of inner liner airflow cooling orifices 164 therethrough. An inner airflow baffle passage 166 is defined between the inner piston ring housing 126 and the inner liner 52. In operation of the combustor 26, the compressed air 82b flowing within the inner flow passage 90 flows through the plurality of inner housing airflow orifices 162 as an inner cooling airflow 174 into the inner airflow baffle passage 166, and then flows from the inner airflow baffle passage 166 through the plurality of inner liner airflow cooling orifices 164 into the combustion chamber 62.

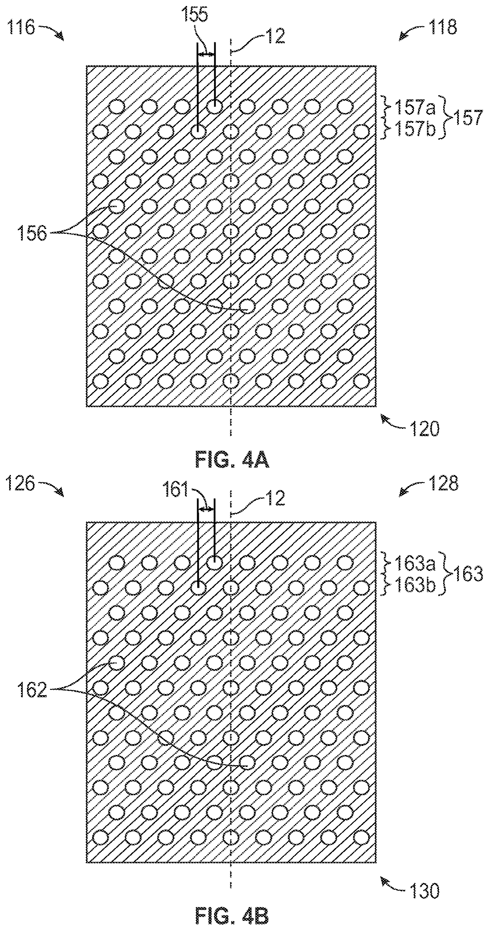

FIG. 4A is a top view of a portion of the outer piston ring housing 116, taken at view 4A-4A of FIG. 3, according to an aspect of the present disclosure. As depicted in FIG. 4A, the outer housing airflow orifices 156 are arranged in a plurality of rows 157 of the outer housing airflow orifices 156. The plurality of rows 157 of the outer housing airflow orifices 156 are arranged such that a first row 157a of the outer housing airflow orifices 156 is offset circumferentially with respect to the longitudinal centerline axis 12 relative to a second row 157b of the outer housing airflow orifices 156 adjacent to the first row 157a of the outer housing airflow orifices 156. The outer housing airflow orifices 156 of the first row 157a are offset from the outer housing airflow orifices 156 of the second row 157b by an outer orifice offset distance 155. The plurality of rows 157 of the outer housing airflow orifices 156, however, can also be arranged such that the first row 157a of the outer housing airflow orifices 156 and the second row 157b of the outer housing airflow orifices 156 adjacent to the first row 157a of the outer housing airflow orifices 156 are aligned circumferentially with respect to the longitudinal centerline axis 12. When the first row 157a of the outer housing airflow orifices 156 and the second row 157b of the outer housing airflow orifices 156 are aligned circumferentially with respect to the longitudinal centerline axis 12, the outer orifice offset distance 155 is zero. The outer housing airflow orifices 156 of each of the plurality of rows 157 of the outer housing airflow orifices 156 are shown to be uniform in size and in shape. The outer housing airflow orifices 156 can, however, vary in at least one of the shape of the outer housing airflow orifices 156 or the size of the outer housing airflow orifices 156. More specifically, while the outer housing airflow orifices 156 are shown in FIG. 4A to be in the shape of a circle, other shapes, such as an oval, a square, a hexagon, and the like, may be utilized instead. Additionally, as an example, the outer housing airflow orifices 156 can have different sizes among the plurality of outer housing airflow orifices 156. For example, some of the plurality of outer housing airflow orifices 156 may have a first diameter, and others of the plurality of outer housing airflow orifices 156 can have a second diameter different from the first diameter.

FIG. 4B is a top view of a portion of the inner piston ring housing 126, taken at view 4B-4B of FIG. 3, according to an aspect of the present disclosure. As depicted in FIG. 4B, the inner housing airflow orifices 162 are arranged in a plurality of rows 163 of the inner housing airflow orifices 162. The plurality of rows 163 of the inner housing airflow orifices 162 are arranged such that a first row 163a of the inner housing airflow orifices 162 is offset circumferentially with respect to the longitudinal centerline axis 12 relative to a second row 163b of the inner housing airflow orifices 162 adjacent to the first row 163a of the inner housing airflow orifices 162. The inner housing airflow orifices 162 of the first row 163a are offset from the inner housing airflow orifices 162 of the second row 163b by an inner orifice offset distance 161. The plurality of rows 163 of the inner housing airflow orifices 162, however, can also be arranged such that the first row 163a of the inner housing airflow orifices 162 and the second row 163b of the inner housing airflow orifices 162, adjacent to the first row 163a of the inner housing airflow orifices 162, are aligned circumferentially with respect to the longitudinal centerline axis 12. When the first row 163a of the inner housing airflow orifices 162 and the second row 163b of the inner housing airflow orifices 162 are aligned circumferentially with respect to the longitudinal centerline axis 12, the inner orifice offset distance 161 is zero. The inner housing airflow orifices 162 of each of the plurality of rows 163 of the inner housing airflow orifices 162 are shown to be uniform in size and in shape. The inner housing airflow orifices 162 can, however, vary in at least one of the shape of the inner housing airflow orifices 162 or the size of the inner housing airflow orifices 162. More specifically, while the inner housing airflow orifices 162 are shown in FIG. 4B to be in the shape of a circle, other shapes, such as an oval, a square, a hexagon, and the like, may be utilized instead. Additionally, as an example, the inner housing airflow orifices 162 can have different sizes among the plurality of inner housing airflow orifices 162. For example, some of the plurality of inner housing airflow orifices 162 may have a first diameter, and others of the plurality of inner housing airflow orifices 162 can have a second diameter different from the first diameter.

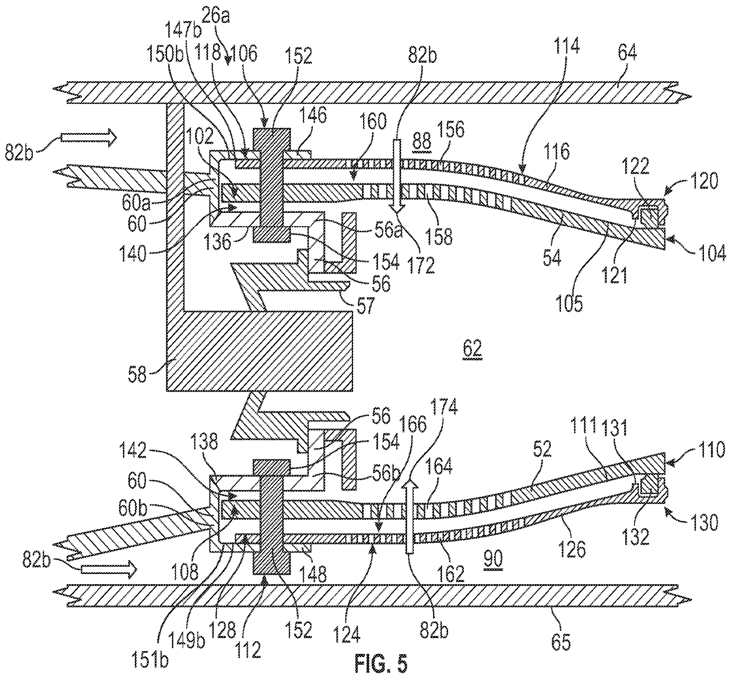

FIG. 5 is a schematic, cross-sectional view of an alternate combustor 26a to the combustor 26 of FIG. 3, according to an aspect of the present disclosure. The alternate combustor 26a is similar to the combustor 26 as depicted in FIG. 3, and elements shared between the alternate combustor 26a and the combustor 26 will be referred to using the same element numbers and the description of those elements provided above for FIG. 3 is also applicable to FIG. 5. In the alternate combustor 26a depicted in FIG. 5, one difference between the FIG. 3 aspect and the FIG. 5 aspect is that, in the FIG. 5 aspect, the outer piston ring housing 116 is arranged within the outer slot 140 defined between the outer dome connecting flange 136 and the outer cowl connecting flange 146. In particular, the outer piston ring housing first end 118 is arranged on an inner side 147b of the outer connection 106. The inner side 147b of the outer connection 106 can be an inner surface 150b of the outer cowl connecting flange 146. In addition, in the FIG. 5 aspect, the inner piston ring housing 126 is arranged within the inner slot 142 defined between the inner dome connecting flange 138 and the inner cowl connecting flange 148. In particular, the inner piston ring housing first end 128 is arranged on an outer side 149b of the inner connection 112. The outer side 149b of the inner connection 112 can be an outer surface 151b of the inner cowl connecting flange 148, providing an alternative arrangement of the outer connection 106 and the inner connection 112.

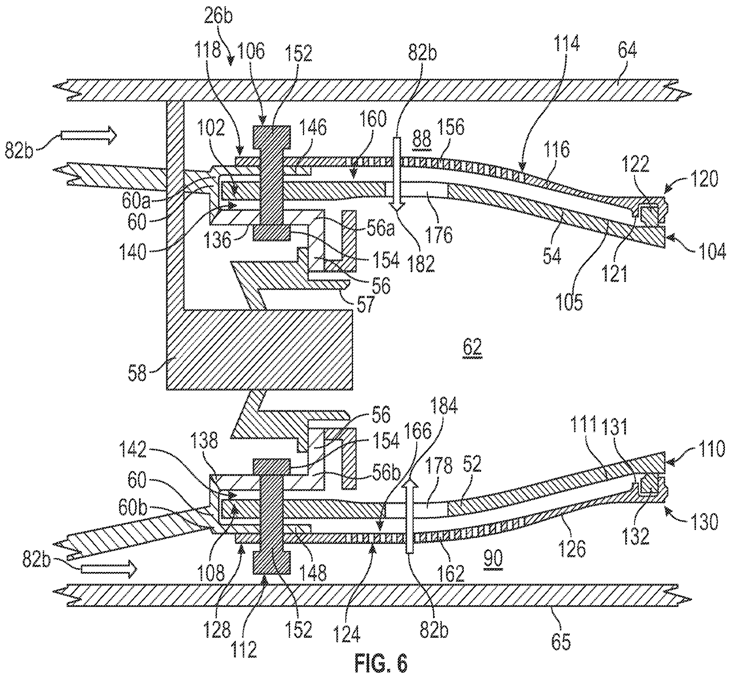

FIG. 6 is a schematic, cross-sectional view of an alternate combustor 26b, according to an aspect of the present disclosure. The alternate combustor 26b is similar to the combustor 26 as depicted in FIG. 3, and elements shared between the alternate combustor 26b and the combustor 26 will be referred to using the same element numbers, and the description of those elements provided above for FIG. 3 is also applicable to FIG. 6. One difference between the alternate combustor 26b of FIG. 6 and the combustor 26 of FIG. 3 is the inclusion of dilution openings through the outer liner 54 and the inner liner 52. More specifically, in FIG. 6, the outer liner 54 includes at least one outer liner dilution opening 176 to provide an outer dilution airflow 182 from the outer flow passage 88 into the combustion chamber 62, and the inner liner 52 includes at least one inner liner dilution opening 178 to provide an inner dilution airflow 184 from the inner flow passage 90 into the combustion chamber 62. In operation of the alternate combustor 26b, the compressed air 82b from the outer flow passage 88 flows through the plurality of outer housing airflow orifices 156, through the outer airflow baffle passage 160, and through the outer liner dilution opening 176 into the combustion chamber 62. Similarly, the compressed air 82b from the inner flow passage 90 flows through the plurality of inner housing airflow orifices 162, through the inner airflow baffle passage 166, and through the inner liner dilution opening 178. While not shown in FIG. 6, the outer liner 54 can also include the outer liner airflow cooling orifices 158 and the inner liner 52 can also include the inner liner airflow cooling orifices 164 to provide impingement cooling as described above with regard to FIG. 2 and FIG. 3.

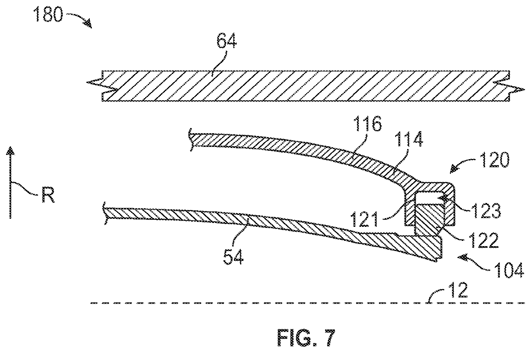

FIG. 7 is an enlarged, schematic, cross-sectional view of a portion of the outer piston ring assembly 114, taken at detail 180 of FIG. 3, according to an aspect of the present disclosure. FIG. 7 depicts the outer liner second end 104 and the outer piston ring housing second end 120. The outer piston ring housing second end 120 includes the outer piston ring holder 121 defining an outer piston ring pocket 123 for receiving the outer piston ring 122 therein. The outer piston ring holder 121 can be shaped to match a shape of the outer piston ring 122. As noted above, the outer piston ring housing second end 120 is unrestrained against the outer liner second end 104, other than the spring loading provided to the outer piston ring housing second end 120 that exerts a radial force on the outer piston ring 122 against the outer liner second end 104 such that the outer piston ring 122 can deform under compression. In an embodiment, the outer piston ring 122 has an approximately rectangular shape with a chamfered edge. Other shapes, however, can be envisioned, such as circular, oval, triangular, and the like, to obtain a desired compressive shape in order to achieve a seal. Although not depicted in greater detail, the inner piston ring assembly 124 depicted in FIG. 3 may be arranged in substantially the same manner as the outer piston ring assembly 114 as depicted in FIG. 7.

The combustor 26 discussed herein attaches the outer piston ring housing 116 to the outer connect 106 and the inner piston ring housing 126 to the inner connection 112. By doing so, a connection between the outer casing 64 with the outer piston ring housing 116 and a connection between the inner casing 65 and the inner piston ring housing 126 can be avoided. This allows a simpler assembly process without blind assemblies. Removing the connection between the outer casing 64 and the outer piston ring housing 116 and the connection between the inner casing 65 and the inner piston ring housing 126 further provides a more consistent seal as manufacturing variances of the outer casing 64 and the inner casing 65 during assembly of the combustor 26 and movement of the outer casing 64 and the inner casing 65, during operation of the combustor 26, no longer impact the seal.

The outer housing airflow orifices 156 allow the outer piston ring housing 116 to serve as a baffle device to reduce a pressure differential between the combustion chamber 62 and the outer airflow baffle passage 160. Similarly, the inner housing airflow orifices 162 allow the inner piston ring housing 126 to serve as a baffle device to reduce a pressure differential between the combustion chamber 62 and the inner airflow baffle passage 166. This provides several benefits. The reduced pressure differential reduces air leakage through the outer slot 140 and the inner slot 142 that cannot otherwise be reduced due to manufacturing limitations. The reduced pressure differential further allows for an increase in a density, or the number of orifices per square inch, of the inner liner airflow cooling orifices 164 in the inner liner 52 and a density of the outer liner airflow cooling orifices 158 in the outer liner 54, without impacting an amount of airflow through the outer liner 54 and the inner liner 52. The increase in density of the inner liner airflow cooling orifices 164 and the outer liner airflow cooling orifices provides more cooling points on the outer liner 54 and the inner liner 52, reducing a thermal gradient across a surface of the outer liner 54 and a surface of the inner liner 52, and resulting in a wider range of materials that can be used. For example, some materials, such as some CMC materials, react negatively to a large thermal gradient, for example a thermal gradient in a range of 900 °F to 1000 °F between a local minimum and a local maximum, but would be suitable for use in the combustor of the current disclosure due to the reduced thermal gradient. Alternatively, a density of the outer housing airflow orifices 156 and a density of the inner housing airflow orifices 162 can be changed to control the amount of airflow through the outer liner 54 and the inner liner 52, to match the needs of the combustor.

Further aspects of the present disclosure are provided by the subject matter of the following clauses.

A combustor for a gas turbine engine, the combustor including a dome structure having an outer dome portion and an inner dome portion, a cowl structure having an outer cowl portion and an inner cowl portion, the cowl structure connected with the dome structure via an outer connection and via an inner connection, an outer liner having an outer liner first end connected to the outer dome portion and the outer cowl portion at the outer connection and an outer liner second end arranged downstream of the outer liner first end, an inner liner having an inner liner first end connected to the inner dome portion and the inner cowl portion at the inner connection and an inner liner second end arranged downstream of the inner liner first end, the inner liner, the outer liner, and the dome structure defining a combustion chamber therebetween, the combustion chamber operable to combust an air-fuel mixture to generate combustion products, an outer piston ring assembly including an outer piston ring housing having an outer piston ring housing first end connected with the outer connection, and an outer piston ring housing second end arranged downstream of the outer piston ring housing first end, the outer piston ring housing second end including an outer piston ring that engages with an outer side of the outer liner second end, and an inner piston ring assembly including an inner piston ring housing having an inner piston ring housing first end connected with the inner connection, and an inner piston ring housing second end arranged downstream of the inner piston ring housing first end, the inner piston ring housing second end including an inner piston ring that engages with an inner side of the inner liner second end.

The combustor according to the preceding clause, (i) the outer piston ring housing first end being connected to an outer side of the outer connection, (ii) the outer piston ring housing second end being arranged as a cantilever from the outer piston ring housing first end, (iii) the inner piston ring housing first end being connected to an inner side of the inner connection, and (iv) the inner piston ring housing second end being arranged as a cantilever from the inner piston ring housing first end.

The combustor according to any preceding clause, the outer liner being constructed of a ceramic matrix composite (CMC) material and the outer piston ring is constructed of a metallic material, and the inner liner being constructed of a CMC material and the inner piston ring housing is constructed of a metallic material.

The combustor according to any preceding clause, (i) the outer piston ring housing second end including an outer piston ring holder, and the outer piston ring is arranged within the outer piston ring holder, and (ii) the inner piston ring housing second end including an inner piston ring holder, and the inner piston ring is arranged within the inner piston ring holder.

The combustor according to any preceding clause, the outer piston ring holder including an outer piston ring pocket, the outer piston ring is arranged within the outer piston ring pocket, and the inner piston ring holder includes an inner piston ring pocket, the inner piston ring being arranged within the inner piston ring pocket.

The combustor according to any preceding clause, the dome structure including an outer dome connecting flange connected with the outer connection and an inner dome connecting flange connected with the inner connection, and the cowl structure comprises an outer cowl connecting flange connected with the outer connection and an inner cowl connecting flange connected with the inner connection.

The combustor according to any preceding clause, at least one of the inner connection or the outer connection including a fastener and a retention member connected to the fastener.

The combustor according to any preceding clause, the combustor being an annular combustor that defines a longitudinal centerline axis, the outer liner extends annularly about the longitudinal centerline axis, the inner liner extends annularly about the longitudinal centerline axis, the outer piston ring extends annularly about the longitudinal centerline axis, and the inner piston ring extends annularly about the longitudinal centerline axis.

The combustor according to any preceding clause, the outer piston ring housing extending annularly about the longitudinal centerline axis, and the inner piston ring housing extends annularly about the longitudinal centerline axis.

The combustor according to any preceding clause, the outer piston ring housing including a plurality of outer piston ring housing segments, each outer piston ring housing segment extending in a circumferential direction partially circumferentially about the longitudinal centerline axis.

The combustor according to any preceding clause, the inner piston ring housing including a plurality of inner piston ring housing segments, each inner piston ring housing segment extending in the circumferential direction partially circumferentially about the longitudinal centerline axis.

The combustor according to any preceding clause, the outer liner further including at least one outer liner dilution opening therethrough, and the inner liner further includes at least one inner liner dilution opening therethrough.

The combustor according to the preceding clause, the outer liner further being free from the plurality of outer liner airflow cooling orifices, and the inner liner further being free from the plurality of inner liner airflow cooling orifices.

The combustor according to any preceding clause, in operation of the combustor, an outer dilution airflow flows through the at least one outer liner dilution opening into the combustion chamber, and an inner dilution airflow flows through the at least one inner liner dilution opening into the combustion chamber.

The combustor according to any preceding clause, the outer piston ring housing including a plurality of outer housing airflow orifices therethrough, the outer liner includes a plurality of outer liner airflow cooling orifices therethrough, and an outer airflow baffle passage is defined between the outer piston ring housing and the outer liner, and the inner piston ring housing includes a plurality of inner housing airflow orifices therethrough, the inner liner includes a plurality of inner liner airflow cooling orifices therethrough, and an inner airflow baffle passage is defined between the inner piston ring housing and the inner liner.

The combustor according to any preceding clause, further including an outer casing and an inner casing, an outer flow passage being defined between the outer casing and the outer piston ring housing, and an inner flow passage being defined between the inner casing and the inner piston ring housing.

The combustor according to any preceding clause, in operation of the combustor, an outer cooling airflow flowing through (a) the outer flow passage, (b) the plurality of outer housing airflow orifices, (c) the outer airflow baffle passage, and (d) the plurality of outer liner airflow cooling orifices into the combustion chamber, and an inner cooling airflow flows through (e) the inner flow passage, (f) the plurality of inner housing airflow orifices, (g) the inner airflow baffle passage, and (h) the plurality of inner liner airflow cooling orifices into the combustion chamber.

The combustor according to any preceding clause, the outer housing airflow orifices are arranged in a plurality of rows of the outer housing airflow orifices, the plurality of rows of the outer housing airflow orifices are arranged such that a first row of the outer housing airflow orifices is offset circumferentially with respect to the longitudinal centerline axis relative to a second row of the outer housing airflow orifices adjacent to the first row of the outer housing airflow orifices.

The combustor according to any preceding clause, the outer housing airflow orifices are arranged in a plurality of rows of the outer housing airflow orifices, the plurality of rows of the outer housing airflow orifices are arranged such that a first row of the outer housing airflow orifices is aligned circumferentially with respect to the longitudinal centerline axis relative to a second row of the outer housing airflow orifices adjacent to the first row of the outer housing airflow orifices.

The combustor according to any preceding clause, the inner housing airflow orifices are arranged in a plurality of rows of the inner housing airflow orifices, the plurality of rows of the inner housing airflow orifices are arranged such that a first row of the inner housing airflow orifices is offset circumferentially with respect to the longitudinal centerline axis relative to a second row of the inner housing airflow orifices adjacent to the first row of the inner housing airflow orifices.

The combustor according to any preceding clause, the inner housing airflow orifices are arranged in a plurality of rows of the inner housing airflow orifices, the plurality of rows of the inner housing airflow orifices are arranged such that a first row of the inner housing airflow orifices is aligned circumferentially with respect to the longitudinal centerline axis relative to a second row of the inner housing airflow orifices adjacent to the first row of the inner housing airflow orifices.

The combustor according to any preceding clause, the outer liner further including at least one outer liner dilution opening therethrough, and the inner liner further including at least one inner liner dilution opening therethrough.

The combustor according to any preceding clause, in operation of the combustor, an outer dilution airflow further (i) flowing from the outer airflow baffle passage through the at least one outer liner dilution opening into the combustion chamber, and an inner dilution airflow further (j) flows from the inner airflow baffle passage through the at least one inner liner dilution opening into the combustion chamber.

The combustor of any preceding clause, wherein the outer piston ring assembly is free from a connection with the outer casing and with the inner casing.

The combustor of any preceding clause, wherein the inner piston ring assembly is free from a connection with the outer casing and with the inner casing.

The combustor of any preceding clause, wherein the outer piston ring forms a seal against the outer liner second end, and the inner piston ring forms a seal against the inner liner second end.

The combustor of any preceding clause, wherein the outer dome connecting flange and the outer cowl connecting flange define an outer slot therebetween, the outer liner first end arranged within the outer slot, and the inner dome connecting flange and the inner cowl connecting flange define an inner slot, the inner liner first end arranged within the inner slot.

The combustor of any preceding clause, wherein the outer piston ring housing first end is arranged within the outer slot, and the inner piston ring housing first end is arranged within the inner slot.

A gas turbine engine including a compressor for compressing air flowing therethrough to provide a compressed air flow, a combustor including a dome structure having an outer dome portion and an inner dome portion, a cowl structure having an outer cowl portion and an inner cowl portion, the cowl structure connected with the dome structure via an outer connection and via an inner connection, an outer liner having an outer liner first end connected to the outer dome portion and the outer cowl portion at the outer connection and an outer liner second end arranged downstream of the outer liner first end, an inner liner having an inner liner first end connected to the inner dome portion and the inner cowl portion at the inner connection and an inner liner second end arranged downstream of the inner liner first end, the inner liner, the outer liner, and the dome structure defining a combustion chamber therebetween, the combustion chamber operable to combust an air-fuel mixture to generate combustion products, an outer piston ring assembly including an outer piston ring housing having an outer piston ring housing first end connected with the outer connection, and an outer piston ring housing second end arranged downstream of the outer piston ring housing first end, the outer piston ring housing second end including an outer piston ring that engages with an outer side of the outer liner second end, and an inner piston ring assembly including an inner piston ring housing having an inner piston ring housing first end connected with the inner connection, and an inner piston ring housing second end arranged downstream of the inner piston ring housing first end, the inner piston ring housing second end including an inner piston ring that engages with an inner side of the inner liner second end, and a turbine section having at least one turbine driven by the combustion products from the combustor.

The gas turbine engine according to any preceding clause, further including (i) the outer piston ring housing first end being connected to an outer side of the outer connection, (ii) the outer piston ring housing second end is arranged as a cantilever from the outer piston ring housing first end, (iii) the inner piston ring housing first end is connected to an inner side of the inner connection, and (iv) the inner piston ring housing second end is arranged as a cantilever from the inner piston ring housing first end.

The gas turbine engine according to any preceding clause, further including the outer liner being constructed of a ceramic matrix composite (CMC) material and the outer piston ring is constructed of a metallic material, and the inner liner being constructed of a CMC material and the inner piston ring housing is constructed of a metallic material.

The gas turbine engine according to any preceding clause, further including (i) the outer piston ring housing second end including an outer piston ring holder, and the outer piston ring is arranged within the outer piston ring holder, and (ii) the inner piston ring housing second end including an inner piston ring holder, and the inner piston ring is arranged within the inner piston ring holder.

The gas turbine engine according to any preceding clause, further including the outer piston ring holder including an outer piston ring pocket, the outer piston ring is arranged within the outer piston ring pocket, and the inner piston ring holder includes an inner piston ring pocket, the inner piston ring being arranged within the inner piston ring pocket.

The gas turbine engine according to any preceding clause, the combustor further including the dome structure including an outer dome connecting flange connected with the outer connection and an inner dome connecting flange connected with the inner connection, and the cowl structure comprises an outer cowl connecting flange connected with the outer connection and an inner cowl connecting flange connected with the inner connection.

The gas turbine engine according to any preceding clause, at least one of the inner connection or the outer connection including a fastener and a retention member connected to the fastener.

The gas turbine engine according to any preceding clause, the combustor being an annular combustor that defines a longitudinal centerline axis, the outer liner extends annularly about the longitudinal centerline axis, the inner liner extends annularly about the longitudinal centerline axis, the outer piston ring extends annularly about the longitudinal centerline axis, and the inner piston ring extends annularly about the longitudinal centerline axis.

The gas turbine engine according to any preceding clause, the outer piston ring housing extending annularly about the longitudinal centerline axis, and the inner piston ring housing extends annularly about the longitudinal centerline axis.

The gas turbine engine according to any preceding clause, the outer piston ring housing including a plurality of outer piston ring housing segments, each outer piston ring housing segment extending in a circumferential direction partially circumferentially about the longitudinal centerline axis.

The gas turbine engine according to any preceding clause, the inner piston ring housing including a plurality of inner piston ring housing segments, each inner piston ring housing segment extending in the circumferential direction partially circumferentially about the longitudinal centerline axis.

The gas turbine engine according to any preceding clause, the outer liner further including at least one outer liner dilution opening therethrough, and the inner liner further includes at least one inner liner dilution opening therethrough.

The gas turbine engine according to the preceding clause, the outer liner further being free from the plurality of outer liner airflow cooling orifices, and the inner liner further being free from the plurality of inner liner airflow cooling orifices.

The gas turbine engine according to the preceding clause, in operation of the combustor, an outer dilution airflow flows through the at least one outer liner dilution opening into the combustion chamber, and an inner dilution airflow flows through the at least one inner liner dilution opening into the combustion chamber.

The gas turbine engine according to any preceding clause, further including the outer piston ring housing including a plurality of outer housing airflow orifices therethrough, the outer liner includes a plurality of outer liner airflow cooling orifices therethrough, an outer airflow baffle passage is defined between the outer piston ring housing and the outer liner, the inner piston ring housing includes a plurality of inner housing airflow orifices therethrough, the inner liner includes a plurality of inner liner airflow cooling orifices therethrough, and an inner airflow baffle passage is defined between the inner piston ring housing and the inner liner.

The gas turbine engine according to any preceding clause, including an outer casing and an inner casing, an outer flow passage being defined between the outer casing and the outer piston ring housing, and an inner flow passage being defined between the inner casing and the inner piston ring housing, and, in operation of the combustor, an outer cooling airflow flows through (a) the outer flow passage, (b) the plurality of outer housing airflow orifices, (c) the outer airflow baffle passage, and (d) the plurality of outer liner airflow cooling orifices into the combustion chamber, and an inner cooling airflow flows through (e) the inner flow passage, (f) the plurality of inner housing airflow orifices, (g) the inner airflow baffle passage, and (h) the plurality of inner liner airflow cooling orifices into the combustion chamber.

The gas turbine engine according to any preceding clause, the outer housing airflow orifices are arranged in a plurality of rows of the outer housing airflow orifices, the plurality of rows of the outer housing airflow orifices are arranged such that a first row of the outer housing airflow orifices is offset circumferentially with respect to the longitudinal centerline axis relative to a second row of the outer housing airflow orifices adjacent to the first row of the outer housing airflow orifices.

The gas turbine engine according to any preceding clause, the outer housing airflow orifices are arranged in a plurality of rows of the outer housing airflow orifices, the plurality of rows of the outer housing airflow orifices are arranged such that a first row of the outer housing airflow orifices is aligned circumferentially with respect to the longitudinal centerline axis relative to a second row of the outer housing airflow orifices adjacent to the first row of the outer housing airflow orifices.

The gas turbine engine according to any preceding clause, the inner housing airflow orifices are arranged in a plurality of rows of the inner housing airflow orifices, the plurality of rows of the inner housing airflow orifices are arranged such that a first row of the inner housing airflow orifices is offset circumferentially with respect to the longitudinal centerline axis relative to a second row of the inner housing airflow orifices adjacent to the first row of the inner housing airflow orifices.

The gas turbine engine according to any preceding clause, the inner housing airflow orifices are arranged in a plurality of rows of the inner housing airflow orifices, the plurality of rows of the inner housing airflow orifices are arranged such that a first row of the inner housing airflow orifices is aligned circumferentially with respect to the longitudinal centerline axis relative to a second row of the inner housing airflow orifices adjacent to the first row of the inner housing airflow orifices.

The gas turbine engine according to any preceding clause, the outer liner further including at least one outer liner dilution opening therethrough, and the inner liner further including at least one inner liner dilution opening therethrough.

The gas turbine engine according to any preceding clause, in operation of the combustor, an outer dilution airflow further (i) flowing from the outer airflow baffle passage through the at least one outer liner dilution opening into the combustion chamber, and an inner dilution airflow further (j) flows from the inner airflow baffle passage through the at least one inner liner dilution opening into the combustion chamber.

The gas turbine engine according to any preceding clause, wherein the outer piston ring assembly is free from a connection with the outer casing and with the inner casing.

The gas turbine engine according to any preceding clause, wherein the inner piston ring assembly is free from a connection with the outer casing and with the inner casing.

The gas turbine engine according to any preceding clause, wherein the outer piston ring forms a seal against the outer liner second end, and the inner piston ring forms a seal against the inner liner second end.

The gas turbine engine according to any preceding clause, wherein the outer dome connecting flange and the outer cowl connecting flange define an outer slot therebetween, the outer liner first end arranged within the outer slot, and the inner dome connecting flange and the inner cowl connecting flange define an inner slot, the inner liner first end arranged within the inner slot.

The gas turbine engine according to any preceding clause, wherein the outer piston ring housing first end is arranged within the outer slot, and the inner piston ring housing first end is arranged within the inner slot.

Although the foregoing description is directed to some exemplary embodiments of the present disclosure, other variations and modifications will be apparent to those skilled in the art, and may be made without departing from the disclosure as claimed. Moreover, features described in connection with one embodiment of the present disclosure may be used in conjunction with other embodiments, even if not explicitly stated above.

## Claims

1. A combustor (26, 26a, 26b) for a gas turbine engine (10), the combustor (26, 26a, 26b) comprising:
a dome structure (56) having an outer dome portion (56a) and an inner dome portion (56b);
a cowl structure (60) having an outer cowl portion (60a) and an inner cowl portion (60b), the cowl structure (60) connected with the dome structure (56) via an outer connection (106) and via an inner connection (112);
an outer liner (54) having an outer liner first end (102) connected to the outer dome portion (56a) and the outer cowl portion (60a) at the outer connection (106) and an outer liner second end (104) arranged downstream of the outer liner first end (102);
an inner liner (52) having an inner liner first end (108) connected to the inner dome portion (56b) and the inner cowl portion (60b) at the inner connection (112) and an inner liner second end (110) arranged downstream of the inner liner first end (108), the inner liner (52), the outer liner (54), and the dome structure (56) defining a combustion chamber (62) therebetween, the combustion chamber (62) operable to combust an air-fuel mixture to generate combustion products (86);
an outer piston ring assembly (114) including an outer piston ring housing (116) having an outer piston ring housing first end (118) connected with the outer connection (106), and an outer piston ring housing second end (120) arranged downstream of the outer piston ring housing first end (118), the outer piston ring housing second end (120) including an outer piston ring (122) that engages with an outer side (105) of the outer liner second end (104); and
an inner piston ring assembly (124) including an inner piston ring housing (126) having an inner piston ring housing first end (128) connected with the inner connection (112), and an inner piston ring housing second end (130) arranged downstream of the inner piston ring housing first end (128), the inner piston ring housing second end (130) including an inner piston ring (132) that engages with an inner side (111) of the inner liner second end (110).

2. The combustor (26, 26b) according to claim 1, wherein (i) the outer piston ring housing first end (118) is connected to an outer side (147a) of the outer connection (106), (ii) the outer piston ring housing second end (120) is arranged as a cantilever from the outer piston ring housing first end (118), (iii) the inner piston ring housing first end (128) is connected to an inner side (149a) of the inner connection (112), and (iv) the inner piston ring housing second end (130) is arranged as a cantilever from the inner piston ring housing first end (128), or alternatively, wherein (i) the outer piston ring housing second end (120) includes an outer piston ring holder (121), and the outer piston ring (122) is arranged within the outer piston ring holder (121), and (ii) the inner piston ring housing second end (130) includes an inner piston ring holder (131), and the inner piston ring (132) is arranged within the inner piston ring holder (131).

3. The combustor (26, 26a, 26b) of any preceding claim, wherein the outer liner (54) is constructed of a ceramic matrix composite (CMC) material and the outer piston ring (122) is constructed of a metallic material, and the inner liner (52) is constructed of a CMC material and the inner piston ring housing (126) is constructed of a metallic material.

4. The combustor (26, 26a, 26b) of any preceding claim, wherein the outer piston ring holder (121) includes an outer piston ring pocket (123), the outer piston ring (122) is arranged within the outer piston ring pocket (123), and the inner piston ring holder (131) includes an inner piston ring pocket (123), the inner piston ring (132) being arranged within the inner piston ring pocket (123), or alternatively,
wherein the dome structure (56) comprises an outer dome connecting flange (136) connected with the outer connection (106) and an inner dome connecting flange (138) connected with the inner connection (112), and the cowl structure (60) comprises an outer cowl connecting flange (146) connected with the outer connection (106) and an inner cowl connecting flange (148) connected with the inner connection (112).

5. The combustor (26, 26a, 26b) according to claim 4, wherein at least one of the inner connection (112) or the outer connection (106) includes a fastener (152) and a retention member (154) connected to the fastener (152).

6. The combustor (26, 26a, 26b) of any preceding claim, wherein the combustor (26) is an annular combustor (26) that defines a longitudinal centerline axis (12), the outer liner (54) extends annularly about the longitudinal centerline axis (12), the inner liner (52) extends annularly about the longitudinal centerline axis (12), the outer piston ring (122) extends annularly about the longitudinal centerline axis (12), and the inner piston ring (132) extends annularly about the longitudinal centerline axis (12).

7. The combustor (26) according to claim 6, wherein the outer piston ring housing (116) extends annularly about the longitudinal centerline axis (12), and the inner piston ring housing (126) extends annularly about the longitudinal centerline axis (12).

8. The combustor (26b) of any preceding claim, wherein the outer liner (54) further includes at least one outer liner dilution opening (176) therethrough, and the inner liner (52) further includes at least one inner liner dilution opening (178) therethrough.

9. The combustor (26b) according to claim 8, wherein, in operation of the combustor (26b), an outer dilution airflow (182) flows through the at least one outer liner dilution opening (176) into the combustion chamber (62), and an inner dilution airflow (184) flows through the at least one inner liner dilution opening (178) into the combustion chamber (62).

10. The combustor (26, 26a, 26b) of any preceding claim, wherein the outer piston ring housing (116) includes a plurality of outer housing airflow orifices (156) therethrough, the outer liner (54) includes a plurality of outer liner airflow cooling orifices (158) therethrough, and an outer airflow baffle passage (160) is defined between the outer piston ring housing (116) and the outer liner (54), and the inner piston ring housing (126) includes a plurality of inner housing airflow orifices (162) therethrough, the inner liner (52) includes a plurality of inner liner airflow cooling orifices (164) therethrough, and an inner airflow baffle passage (166) is defined between the inner piston ring housing (126) and the inner liner (52), or alternatively,
wherein the plurality of outer housing airflow orifices (156) are arranged in a plurality of rows (157) of the outer housing airflow orifices (156), the plurality of rows (157) of the outer housing airflow orifices (156) are arranged such that a first row (157a) of the outer housing airflow orifices (156) is offset circumferentially with respect to a longitudinal centerline axis (12) of the combustor (26, 26a, 26b) relative to a second row (157b) of the outer housing airflow orifices (156) adjacent to the first row (157a) of the outer housing airflow orifices (156), or alternatively,
wherein plurality of the inner housing airflow orifices (162) are arranged in a plurality of rows (163) of the inner housing airflow orifices (162), the plurality of rows (163) of the inner housing airflow orifices (162) are arranged such that a first row (163a) of the inner housing airflow orifices (162) is offset circumferentially with respect to a longitudinal centerline axis (12) of the combustor (26, 26a, 26b) relative to a second row (163b) of the inner housing airflow orifices (162) adjacent to the first row (163a) of the inner housing airflow orifices (162).

11. The combustor (26, 26a, 26b) according to claim 10, further comprising an outer casing (64) and an inner casing (65), an outer flow passage (88) being defined between the outer casing (64) and the outer piston ring housing (116), and an inner flow passage (90) being defined between the inner casing (65) and the inner piston ring housing (126).

12. The combustor (26, 26a, 26b) according to claim 10 or 11, wherein, in operation of the combustor (26, 26a, 26b), an outer cooling airflow (172) flows through (a) the outer flow passage (88), (b) the plurality of outer housing airflow orifices (156), (c) the outer airflow baffle passage (160), and (d) the plurality of outer liner airflow cooling orifices (158) into the combustion chamber (62), and an inner cooling airflow (174) flows through (e) the inner flow passage (90), (f) the plurality of inner housing airflow orifices (162), (g) the inner airflow baffle passage (166), and (h) the plurality of inner liner airflow cooling orifices (164) into the combustion chamber (62).

13. The combustor (26b) according to any of claims 10 to 12, wherein the outer liner (54) further includes a least one outer liner dilution opening (176) therethrough, and the inner liner (52) further includes at least one inner liner dilution opening (178) therethrough, or alternatively, wherein, in operation of the combustor (26b), an outer dilution airflow (182) further (i) flows from the outer airflow baffle passage (160) through the at least one outer liner dilution opening (176) into the combustion chamber (62), and an inner dilution airflow (184) further (j) flows from the inner airflow baffle passage (166) through the at least one inner liner dilution opening (178) into the combustion chamber (62).

14. A gas turbine engine (10) comprising:
a compressor for compressing air flowing therethrough to provide a compressed air flow;
a combustor (26) according to any one of claims 1 to 13; and
a turbine section having at least one turbine driven by the combustion products (86) from the combustor (26).

15. The gas turbine engine (10) according to claim 14, wherein the outer piston ring housing (116) includes a plurality of outer housing airflow orifices (156) therethrough, the outer liner (54) includes a plurality of outer liner airflow cooling orifices (158) therethrough, an outer airflow baffle passage (160) is defined between the outer piston ring housing (116) and the outer liner (54), the inner piston ring housing (126) includes a plurality of inner housing airflow orifices (162) therethrough, the inner liner (52) includes a plurality of inner liner airflow cooling orifices (164) therethrough, and an inner airflow baffle passage (166) is defined between the inner piston ring housing (126) and the inner liner (52).
